# EUROPEAN PATENT SPECIFICATION

(11) **EP 1 686 300 B1**
(45) Date of publication and mention of the grant of the patent: **30.04.2008**
(21) Application number: 05001916.5
(22) Date of filing: 31.01.2005
(51) Int. Cl.: F16K 17/36

(54) **Venting and air-bleed valve for a fuel tank**
Be- und Entlüftungsventil eines Kraftstofftanks
Soupape d'aération et de purge pour réservoir de carburant

(43) Date of publication of application: 02.08.2006
(73) Proprietor: Bayerische Motoren Werke Aktiengesellschaft, 80809 München (DE); Zadi S.p.A., 41012 Carpi (Modena) (IT)
(72) Inventor: Hudelmaier, Jörg, Dr., 80636 München (DE); Codeluppi, Marco, 41012 Carpi Modena (IT)
(74) Representative: von Bülow, Tam

(56) References cited:
- DE-B- 1 024 019
- FR-A- 2 271 139
- US-A- 6 142 167

## Description

The invention relates to a venting and air-bleed valve for a fuel tank according to the preamble of Claim 1. A valve of this type is known from DE-AS 10 24 019.

A venting, which allows a gas exchange with the environment in both directions, is prescribed for fuel tanks or containers in general for combustible liquids. On the other hand it is necessary to prevent liquid from escaping from the container when the vehicle overturns, during sharp acceleration or braking or during pronounced tilting to the side, as occurs in the case of motorcycles for example. For this purpose, DE-AS 10 24 019 proposes a venting and air-bleed valve, of which the valve body, displaceable in a linear manner, is coupled to a pendulum in such a way that after a pre-determined oscillating angle of the pendulum the valve body closes a venting and air-bleed opening. In this case, above its axle the pendulum has an enlarged dish which is shaped in a concave manner and on which the valve body is supported. The valve body is pre-stressed by a spring in the direction towards the dish.

Similar valves which are actuated by pendulums are also known from DE 196 14 981 A1, DE 29 32 076 A1, DE 30 30 288 C2, DE 43 17 507 C2, EP 0 802 078 B1, GB 850 544 and US 4,041,967, the majority of these valves being designed in the form of ball valves.

A problem of the known valves is that the valve body can remain sticking to the valve seat, even if the pendulum has swung back again into its normal, non-swung-out position, whether because the restoring force of the spring is not sufficient or because the spring is broken. In this case the restoring force of the spring has to be adjusted to the force exerted by the pendulum so that it is not possible to design the spring in such a way that its restoring force is sufficient to prevent the valve body from "sticking" in each case.

The object of the invention is to improve the valve of the type defined in the introduction, in such a way that, whilst having a simplified design, it operates in a more reliable manner and, in particular, the valve body is prevented from sticking or catching.

This object is attained by the features set out in Claim 1. Advantageous embodiments and further developments of the invention are set out in the Sub-Claims.

The basic principle of the invention is for the pendulum and the valve body to be forcibly coupled in such a way that the forcible coupling is present in both directions of the movement, i.e. the opening and the closing directions of the valve body.

In a preferred embodiment of the invention the forcibly coupling between the pendulum and the valve body is made by two different connecting link guides having different characteristics. In this way, the closing movement and the opening movement of the valve body in dependence of a tilting angle of the pendulum is different in both directions of movement.

In a specific embodiment of the invention, a pin, which engages a slotted guide in the form of a slot on the pendulum, is provided on the valve body for forcibly coupling the valve body in the opening direction of the valve body. For the closing direction of the valve body, the lower end of the valve body is forcibly coupled with a guiding surface on the pendulum.

In another embodiment the slotted guide in the form of a slot can also be arranged on the valve body; then the cooperating pin is arranged on the pendulum.

In the normal operating position, which in this case is defined as the non-swung-out position of the pendulum and thus the open position of the valve, the slotted guide is preferably situated above the axle of the pendulum, the said pin being situated parallel to the axle of the pendulum and at a right angle to the central axis of the valve body.

The slotted connecting link guide responsible for the opening of the valve has a specially curved form consisting in one example of two curved arcs. Other forms are of course possible.

In another embodiment the coupling between the valve and the pendulum for both directions of movement of the valve body, i.e. for opening and closing is performed by the slotted guide and the pin. In this embodiment the slotted guide is preferably designed in the form of a slot in the shape of an arc.

In accordance with a further development of the invention the venting and air-bleed valve is arranged in a vehicle in such a way that the oscillation plane of the pendulum approximately forms an angle of 45° to the direction of travel of the vehicle. This ensures that in all conceivable states or positions of the vehicle, such as for example an excessive inclination to the side, overturning laterally, braking, acceleration or overturning forwards or backwards, the valve is always closed after a pre-determined threshold position and is opened when this threshold position is not reached.

In accordance with another further development of the invention the valve can be integrated in the connexion of a fuel tank. It can also, however, be attached separately from the tank connexion. In order to increase safety, a pressure-control valve is provided, which is connected as a by-pass with respect to the air-bleed path, so that a dangerous excess pressure can be reduced even if the valve actuated by the pendulum is closed.

The invention is explained in greater detail below with reference to an embodiment in conjunction with the drawing. In the drawing
- Fig. 1: is a diagrammatic lateral view of the venting and air-bleed valve according to the invention in the normal operating position;
- Fig. 2: is a similar view of the valve as shown in Fig. 1. in the closed position and with the pendulum swung out;
- Fig. 3: is a longitudinal section of the valve as shown in Fig. 1 in the direction of the section line III-III;
- Fig. 4: is a perspective view of the venting and air-bleed valve according to the invention, which is integrated into a refuelling opening;
- Fig. 5: is an enlarged schematic side view of a part of the pendulum and a part of the valve body in a non swung out position of the pendulum;
- Fig. 6: is the same view as Fig. 5 with the pendulum in a swung out position; and
- Fig. 7: is a similar view as Fig. 5 according to another embodiment of the invention.

The venting and air-bleed valve, which is referred to below merely as the valve 1, has a valve body 2 which is displaceable in a linear manner and which is guided in a housing 3 and co-operates with a valve seat 4 to which is attached a tube 5 leading to the atmosphere.

The interior of the housing 3 is connected by way of an opening 6 for example to the interior of the fuel tank which is to be vented and air-bled and into the wall 7 of which the valve according to the invention is inserted.

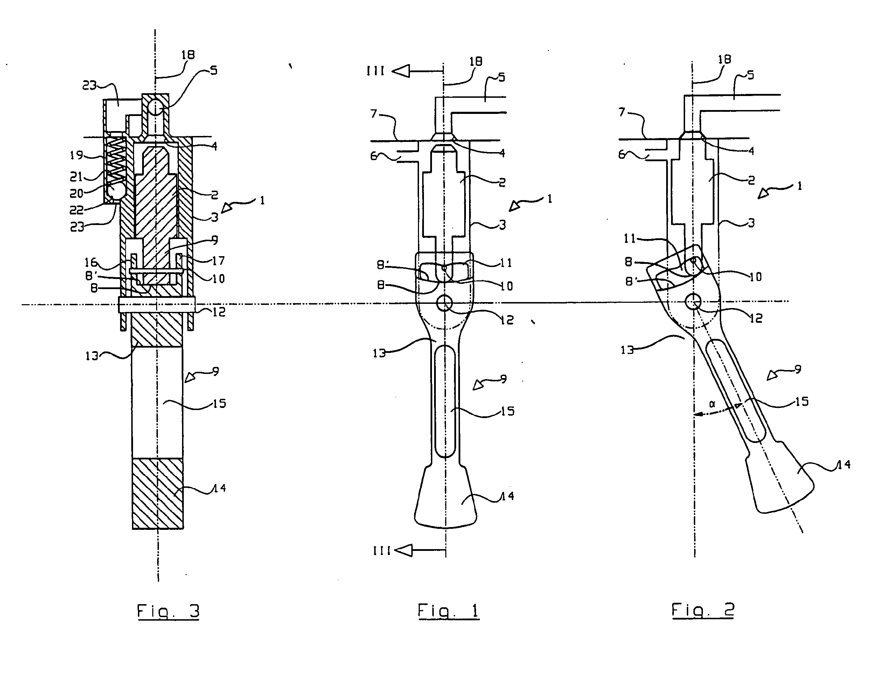

The lower end 8 of the valve body 2 is forcibly coupled to a pendulum 9, namely in the specific embodiment of Figs. 1 to 6 in the following manner: With respect to the closing movement of the valve body 2 the lower end 8 of the valve body rests on a surface 8' of the pendulum 9. When the pendulum 9 is tilted from its none swung out position into a swung out position (compare Fig. 2), the valve body 2 is moved upwards in direction of closing the valve.

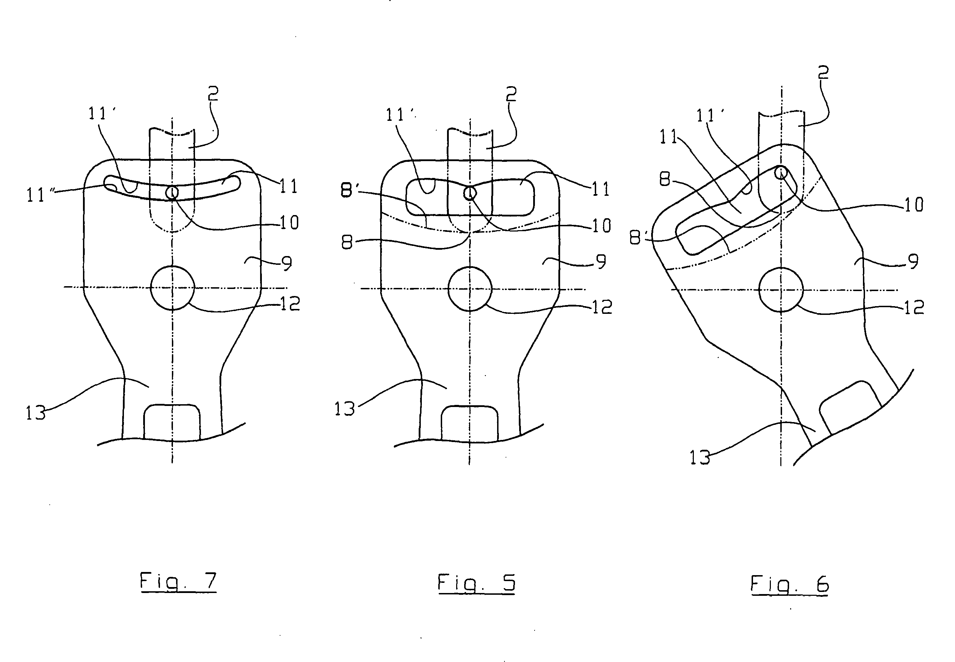

With respect to the opening movement of the valve body, the valve body has a pin 10, which engages in a slotted guide 11 of the pendulum 9. The slotted guide 11 is designed in a special form of a slot which in this case is curved as explained below in connection with Figs. 5 and 6. The pendulum 9 is fastened to the housing 3 so as to be pivotable by a pendulum axle 12. The slotted guide 11 is arranged above the pendulum axle 12, with respect to the normal operating position of the valve as illustrated in Fig. 1, whereas a pendulum arm 13 rests with a pendulum bob 14 below the pendulum axle. For a more advantageous distribution of masses, the pendulum arm 13 has a recess 15, to the lower end of which the pendulum bob 14 is attached.

As may best be seen from Fig. 3, the upper end of the pendulum 9 has two parallel arms 16 and 17, which engage over the lower end 8 of the valve body 2 and which each comprise a respective slot of the slotted guide 11, so that the pin is guided at its two ends in the slotted guide 11.

A forcible coupling between the valve body 2 and the pendulum 9, which is active in both directions of rotation, i.e. upwards and downwards, of the valve body 2, is produced in one direction, i.e. the opening direction, by the slotted guide 11 and the pin 10 and in the other direction, i.e. the closing direction, by a forcibly coupling of the lower end 8 of the valve body and a respective coacting surface 8' of the pendulum.

Fig. 2 shows the valve in its closed position, which is reached when the pendulum 9 has swung out by at least an angle α. The valve body 2 then closes the valve seat 4 and thus the tube 5. If the pendulum 9 is swung back again into the position illustrated in Fig. 1 from the position illustrated in Fig. 2, then the valve body 2 is also pulled back again by the forcible coupling into the open position as shown in Fig. 1.

It is also clear from Figs. 1 and 2, that the pendulum 9 can swing out towards both sides, since the slotted guide 11 is made mirror-symmetrical with respect to the central axis 18.

It may be further seen from Fig. 3 that a pressure-control valve 19 is connected in parallel with the venting and air-bleed valve by way of the valve seat 4, the pressure-control valve 19 being designed in this case in the form of a ball valve, the valve ball 20 of which is pressed by a spring 21 against a valve seat 22 and thus closes an opening 23 directed towards the interior of the fuel container, the outlet side of the pressure-control valve 19 having a flow connexion 23 to the tube 5 or to the atmosphere. The pressure-control valve 19 serves to prevent an impermissibly high excess pressure in the fuel container even if the venting and air-bleed valve is closed, in order, for example, to prevent an explosion of the fuel container.

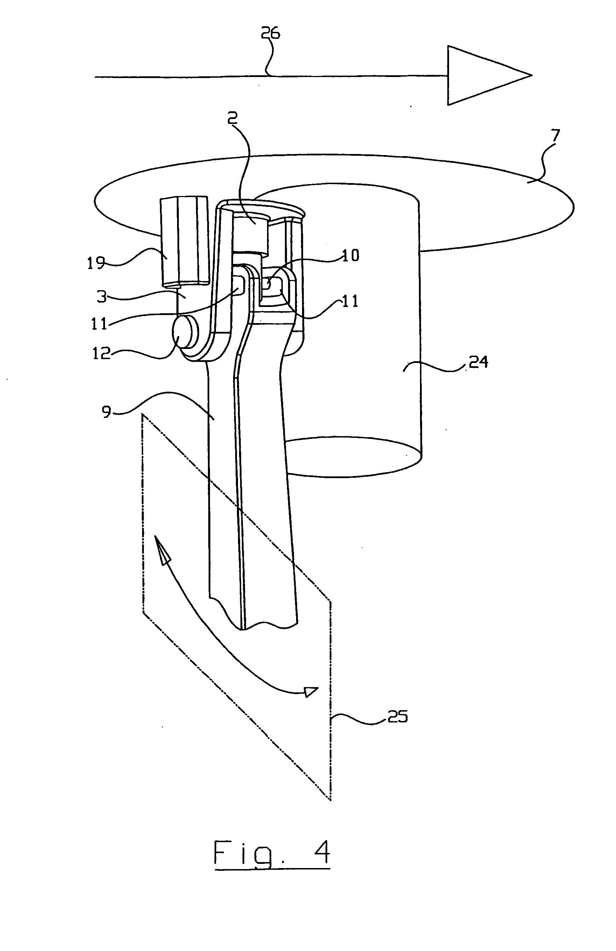

Fig. 4 is a perspective partial view of the venting and air-bleed valve according to the invention, which is combined with a tank connexion 24 to form a structural unit. In addition, it should be mentioned that the valve should be fitted in the tank of a vehicle in such a way that the oscillation plane 25 of the pendulum 9 is situated at an angle of 45° to the direction of travel 26, so that the pendulum 9 swings out in all directions of movement, positions and acceleration procedures of the vehicle.

Fig. 5 and 6 show in more detail the slotted guide of one embodiment of the invention. The upper side 11' of the slotted guide cooperating with the pin 10 has the form of two slighly curved arcs connected to each other in the middle, where the connecting point or connecting area of these two mirror symmetrical arcs is the lowest point of the slotted guide. Of course, for a better movement, the connecting area of both arcs can be curved in a convex manner. Generally, the upper side 11' of the slotted guide 11 can have other forms like straight lines. It is only important that the slotted guide 11 and the pin 10 act together in such a way that the valve body 2 is forcibly coupled with the pendulum 9 in order to surely open the valve, if the pendulum goes from its swung out position (Fig. 2) into its none swung out position (Fig. 1).

Figs. 5 and 6 also clearly show that the lower end 8 of the valve body 2 is in contact and therewith forcibly coupled with a surface 8' of the pendulum in order to move the valve body 2 upwards, if the pendulum goes from its none swung out position of Fig. 5 into the swung out position of Fig. 6. This surface 8' may have the form of an arc, of a straight line or of any suitable other form for the desired movement characteristic of the valve body. It is located between both arms 16 and 17 shown in Fig. 3.

The embodiment of Fig. 7 is somewhat different from the embodiment of Figs. 1 to 5 in such a way that the forcibly coupling between the valve body 2 and the pendulum 9 for both direction of movement is made by the slotted guide 11 and the pin 10. In this embodiment the upper side 11' of the slotted guide 11 and the lower side 11" are parallel to eacht other and have, for example, the form of an arc.

In another similar embodiment, which is not shown here, the upper side 11' of the slotted guide 11 and the lower side 11" are not parallel to each other and have different forms in order to give the valve body different characteristics of movement in both directions of movement. Of course, in this case the pin 10 has a play between the upper side 11' and the lower side 11" of the slotted guide.

## Claims

1. A venting and air-bleed valve (1) for a fuel tank with a movable valve body (2) and a pendulum (9) which is coupled to the valve body (2), **characterized in that** the pendulum (9) is forcibly coupled to the valve body (2) in both directions of movement of the valve body (2).

2. A valve (1) according to Claim 1, **characterized by** the forcibly coupling between the pendulum (9) and the valve body (2) is made in such a way that the movement in both directions of movement in dependence of a tilting angle (α) of the pendulum (9) is different in both directions of movement.

3. A valve (1) according to Claim 1 or 2, **characterized by** a pin (10) engaging a slotted guide (11) provided on the valve body (2).

4. A valve (1) according to one of the Claims 1 or 2, **characterized by** a pin (10) provided on the pendulum (9) engaging a slotted guide (11) provided on the valve body (2).

5. A valve (1) according to one of Claims 1 to 4, **characterized by** two connecting link guides (11, 8') forcing different positions of the valve body for both directions of movement in dependence on the position of the pendulum (9).

6. A valve (1) according to Claim 5, **characterized in that** both connecting link guides (11, 8') are provided either on the valve body (2) or on the pendulum (9).

7. A valve (1) according to Claim 5, **characterized in that** one connecting link guide is provided on the valve body (2) and the other connecting link guide i.s provided on the pendulum (9).

8. A valve (1) according to one of Claims 3 and 5 to 7 or claims 4 and 5 to 7, **characterized in that** the slotted guide (11) is designed in the form of a slot in the shape of two arcs (11').

9. A valve (1) according to one of Claims 1 to 8, **characterized in that** the oscillation plane (25) of the pendulum (9) is orientated at an angle of approximately 45° to the direction of travel (26).

10. A valve (1) according to one of Claims 1 to 9, **characterized in that** the valve (1) forms a structural unit with one or more tank connections (24).

11. A valve (1) according to one of Claims 1 to 9, **characterized in that** the valve (1) can be fastened to a wall (7) of a fuel tank separately from a tank connection.

12. A valve (1) according to one of Claims 1 to 11, **characterized in that** a pressure control valve is additionally connectable in parallel with the valve (1).

## Patentansprüche

1. Be- und Entlüftungsventil (1) für einen Kraftstofftank mit einem bewegbaren Ventilkörper (2) und einem Pendel (9), das mit dem Ventilkörper (2) gekoppelt ist, **dadurch gekennzeichnet, daß** das Pendel (9) mit dem Ventilkörper (2) in beiden Bewegungsrichtungen des Ventilkörpers (2) zwangsgekoppelt ist.

2. Ventil (1) nach Anspruch 1, **dadurch gekennzeichnet, daß** die Zwangskopplung zwischen dem Pendel (9) und dem Ventilkörper (2) derart ausgestaltet ist, daß die Bewegung in beiden Bewegungsrichtungen in Abhängigkeit von einem Schwenkwinkel (α) des Pendels (9) in beiden Bewegungsrichtungen unterschiedlich ist.

3. Ventil (1) nach Anspruch 1 oder 2, **gekennzeichnet durch** einen Stift (10), der in eine Kulissenführung (11), die an dem Ventilkörper (2) vorgesehen ist, eingreift.

4. Ventil (1) nach einem der Ansprüche 1 oder 2, **gekennzeichnet durch** einen an dem Pendel (9) vorgesehenen Stift (10), der in eine Kulissenführung (11), die an dem Ventilkörper (2) vorgesehen ist, eingreift.

5. Ventil (1) nach einem der Ansprüche 1 bis 4, **gekennzeichnet durch** zwei Kulissenführungen (11, 8'), die unterschiedliche Positionen des Ventilkörpers für beide Bewegungsrichtungen in Abhängigkeit von der Position des Pendels (9) erzwingen.

6. Ventil (1) nach Anspruch 5, **dadurch gekennzeichnet, daß** beide Kulissenführungen (11, 8') entweder an dem Ventilkörper (2) oder an dem Pendel (9) vorgesehen sind.

7. Ventil (1) nach Anspruch 5, **dadurch gekennzeichnet, daß** eine Kulissenführung an dem Ventilkörper (2) und die andere Kulissenführung an dem Pendel (9) vorgesehen ist.

8. Ventil (1) nach einem der Ansprüche 3 und 5 bis 7 oder den Ansprüchen 4 und 5 bis 7, **dadurch gekennzeichnet, daß** die Kulissenführung (11) in der Form eines Schlitzes mit der Gestalt von zwei Bögen (11') ausgebildet ist.

9. Ventil (1) nach einem der Ansprüche 1 bis 8, **dadurch gekennzeichnet, daß** die Schwingungsebene (25) des Pendels (9) unter einem Winkel von ca. 45° zur Fahrtrichtung (26) ausgerichtet ist.

10. Ventil (1) nach einem der Ansprüche 1 bis 9, **dadurch gekennzeichnet, daß** das Ventil (1) eine strukturelle Einheit mit einer oder mehreren Betankungsöffnungen (24) bildet.

11. Ventil (1) nach einem der Ansprüche 1 bis 9, **dadurch gekennzeichnet, daß** das Ventil (1) an einer Wand (7) eines Kraftstofftanks unabhängig von der Betankungsöffnung befestigt werden kann.

12. Ventil (1) nach einem der Ansprüche 1 bis 11, **dadurch gekennzeichnet, daß** ein Drucksteuerventil zusätzlich parallel zu dem Ventil (1) verbindbar ist.

## Revendications

1. Soupape (1) d'aération et de purge pour un réservoir de carburant, ayant un corps de soupape (2) pouvant être déplacé et un pendule (9) qui est couplé au corps de soupape (2), **caractérisée en ce que** le pendule (9) est couplé en force au corps de soupape (2) dans les deux directions de déplacement du corps de soupape (2).

2. Soupape (1) selon la revendication 1, **caractérisée en ce que** le couplage en force entre le pendule (9) et le corps de soupape (2) est réalisé de sorte que le déplacement dans les deux directions de déplacement en fonction d'un angle d'inclinaison (α) du pendule (9) est différent dans les deux directions de déplacement.

3. Soupape (1) selon la revendication 1 ou la revendication 2, **caractérisée par** une goupille (10) s'engageant dans un guide à fente (11) prévu sur le corps de soupape (2).

4. Soupape (1) selon l'une des revendications 1 ou 2, **caractérisée par** une goupille (10) prévue sur le pendule (9) s'engageant dans un guide à fente (11) prévu sur le corps de soupape (2).

5. Soupape (1) selon l'une des revendications 1 à 4, **caractérisée par** deux guides de liaison de connexion (11, 8') forçant différentes positions du corps de soupape pour les deux directions de déplacement en fonction de la position du pendule (9).

6. Soupape (1) selon la revendication 5, **caractérisée en ce que** les deux guides de liaison de connexion (11, 8') sont prévus soit sur le corps de soupape (2) soit sur le pendule (9).

7. Soupape (1) selon la revendication 5, **caractérisée en ce qu'**un guide de liaison de connexion est prévu sur le corps de soupape (2) et l'autre guide de liaison de connexion est prévu sur le pendule (9).

8. Soupape (1) selon l'une des revendications 3 et 5 à 7 ou des revendications 4 et 5 à 7, **caractérisée en ce que** le guide à fente (11),est conçu sous la forme d'une fente sous la forme de deux arcs (11').

9. Soupape (1) selon l'une des revendications 1 à 8, **caractérisée en ce que** le plan d'oscillation (25) du pendule (9) est orienté selon un angle d'approximativement 45° par rapport à la direction de déplacement (26).

10. Soupape (1) selon l'une des revendications 1 à 9, **caractérisée en ce que** la soupape (1) forme une unité structurelle ayant une ou plusieurs connexions de réservoir (24).

11. Soupape (1) selon l'une des revendications 1 à 9, **caractérisée en ce que** la soupape (1) peut être fixée à une paroi (7) d'un réservoir de carburant séparément d'une connexion de réservoir.

12. Soupape (1) selon l'une des revendications 1 à 11, **caractérisée en ce qu'**une vanne de commande de pression peut être connectée de façon additionnelle en parallèle avec la soupape (1).
